# EUROPEAN PATENT SPECIFICATION

(11) **EP 1 622 311 B1**
(45) Date of publication and mention of the grant of the patent: **05.04.2006**
(21) Application number: 04291930.8
(22) Date of filing: 29.07.2004
(51) Int. Cl.: H04L 12/28, H04L 12/24, H04L 29/12

(54) **Method for coupling a device to a management server via a network**
Verfahren zur Schaltung von einem Gerät zu einem Verwaltungsserver durch einen Netzwerk
Méthode pour coupler un équipement à un serveur de gestion par l'intermédiaire d'un réseau

(43) Date of publication of application: 01.02.2006
(73) Proprietor: ALCATEL, 75008 Paris (FR)
(72) Inventor: Van Den Bosch, Sven Jozef Jeanne, 9080 Lochristi (BE); De Clercq, Jeremy, 9000 Gent (BE); Bouchat, Christele, 2060 Antwerp (BE)
(74) Representative: Narmon, Gisèle Marie Thérèse

(56) References cited:
- WO-A-01/19080
- US-A- 6 108 330

## Description

The invention relates to a method for coupling a device to a management server via a network.

Examples of such a device are set top boxes and modems and wired/wireless terminals. Examples of such a management server are content provider servers and service provider remote management servers such as an AutoConfiguration Server (ACS) described in the TR-46 architecture (DSL Forum). Examples of such a network are wired/wireless networks comprising network-elements such as switches, routers, bridges, forwarders and multiplexers.

A prior art method is of common general knowledge. In case of the device being pre-configured, the device comprises one/more specific destination addresses defining one/more specific management servers. Then, when being connected to the network, the device contacts the management server as defined by the specific destination address via the network, for example for downloading audio/video. Such a pre-configured method is disadvantageous in that a user's choice is limited to the management servers defined by the pre-stored specific destination addresses.

In case of the device not being pre-configured, the device comprises a non-specific destination identifier. Then, when being connected to the network, a local access provider intercepts a request from the device to a management server, which local access provider is capable of converting the non-specific destination identifier into a specific destination identifier defining a local management server. This conversion is done relatively unflexibly: one non-specific destination identifier is always converted/translated into one and the same specific destination identifier. As a result, the device contacts this local management server via the network, for example for downloading audio/video. Such a non-pre-configured method is disadvantageous in that a user's choice is limited to the local management server defined by the specific destination identifier. In other words, the local access provider determines which management server is to be contacted.

It is an object of the invention, inter alia, to provide a method for coupling a device to a management server via a network, which method offers more options.

The method according to the invention is characterised in that the method comprises
- a reporting step of supplying source information to the management server, which source information defines the device;
- a configuring step of supplying non-default destination information and the source information from the management server to the network, which non-default destination information defines the management server;
- a requesting step of supplying default destination information and the source information from the device to the network, which default destination information defines a group of management servers including the management server; and
- a linking step of linking the default destination information to the non-default destination information via the source information in the network; and
- a coupling step of coupling the device via the network to the management server.
   By firstly supplying source information defining the device to the management server, the device is registered at the management server. This source information is for example supplied by sending a fax to the content provider who owns the management server. By secondly letting the management server configure (a part of) the network, the network is informed of the non-default destination information defining the management server and of the source information defining the device and of their mutual relationship (non-default = specific). By thirdly supplying the default destination information defining a group of management servers including the management server and the source information from the device to the network, the network is informed of the device as defined by the source information wanting to contact the group of management servers as defined by the default destination information and of their mutual relationship (default = non-specific). Because of the source information being linked to the non-default destination information as well as to the default destination information, the network can now, fourthly, link the default destination information to the non-default destination information via the source information. As a result, fifthly, the device can be coupled to the management server via the network, without being pre-configured, and without a user's choice being limited.
   An embodiment of the method according to the invention is characterised in that the source information comprises a source IP address, the non-default destination information comprising a non-default destination IP address, the default destination information comprising a default Uniform Resource Locator, the network comprising a Domain Name Server which is configured by the management server.
   In this case, the source information comprises a source IP address which is supplied to the device at the start of an internet session. By for example visiting a website of the content provider who owns the management server, this source IP address is supplied to the management server. The Domain Name Server is configured by the management server by supplying the non-default destination address and the source IP address to this Domain Name Server (non-default = specific). The Domain Name Server can then link the default Uniform Resource Locator (as supplied by the device) to the non-default destination IP address (as supplied by the management server) etc. (default = non-specific).
   An embodiment of the method according to the invention is characterised in that the source information comprises a source IP address, the non-default destination information comprising a non-default destination IP address, the default destination information comprising a default destination IP address, the network comprising an IP address filter which is configured by the management server.
   In this case, the source information comprises a source IP address which is supplied to the device at the start of an internet session. By for example visiting a website of the content provider who owns the management server, this source IP address is supplied to the management server. The IP address filter is configured by the management server by supplying the non-default destination IP address and the source IP address to this IP address filter (non-default = specific). The IP address filter can then link/replace the default destination IP address (as supplied by the device) to/by the non-default destination IP address (as supplied by the management server) etc. (default = non-specific).
   The invention also relates to a management server for use in a method for coupling a device to the management server via a network.
   The management server according to the invention is characterised in that the management server comprises
- a receiving unit for receiving source information, which source information defines the device; and
- a sending unit for sending non-default destination information and the source information to the network, which non-default destination information defines the management server;
whereby default destination information and the source information are supplied from the device to the network, which default destination information defines a group of management servers including the management server, the default destination information being linked to the non-default destination information via the source information in the network for coupling the device via the network to the management server.

The invention also relates to a server processor program product to be run via a management server for use in a method for coupling a device to the management server via a network.

The server processor program product according to the invention is characterised in that the server processor program product comprises
- a receiving function for receiving source information, which source information defines the device; and
- a sending function for sending non-default destination information and the source information to the network, which non-default destination information defines the management server;
whereby default destination information and the source information are supplied from the device to the network, which default destination information defines a group of management servers including the management server, the default destination information being linked to the non-default destination information via the source information in the network for coupling the device via the network to the management server.

The invention also relates to a device for use in a method for coupling the device to a management server via a network.

The device according to the invention is characterised in that the device comprises
- a sending unit for sending default destination information and source information to the network, which default destination information defines a group of management servers including the management server and which source information defines the device and has been supplied to the management server;
whereby non-default destination information and the source information are supplied from the management server to the network, which non-default destination information defines the management server, the default destination information being linked to the non-default destination information via the source information in the network for coupling the device via the network to the management server.

The invention also relates to a device processor program product to be run via a device for use in a method for coupling the device to a management server via a network.

The device processor program product according to the invention is characterised in that the device processor program product comprises
- a sending function for sending default destination information and source information to the network, which default destination information defines a group of management servers including the management server and which source information defines the device and has been supplied to the management server;
whereby non-default destination information and the source information are supplied from the management server to the network, which non-default destination information defines the management server, the default destination information being linked to the non-default destination information via the source information in the network for coupling the device via the network to the management server.

The invention also relates to a network for use in a method for coupling a device to a management server via the network.

The network according to the invention is characterised in that the network comprises
- a first receiving unit for receiving non-default destination information and the source information from the management server, which non-default destination information defines the management server and which source information defines the device and has been supplied to the management server;
- a second receiving unit for receiving default destination information and the source information from the device, which default destination information defines a group of management servers including the management server; and
- a linking unit for linking the default destination information to the non-default destination information via the source information;
for coupling the device via the network to the management server.

The invention also relates to a network-element for use in a method for coupling a device to a management server via a network comprising the network-element.

The network-element according to the invention is characterised in that the network-element comprises
- a first receiving unit for receiving non-default destination information and the source information from the management server, which non-default destination information defines the management server and which source information defines the device and has been supplied to the management server;
- a second receiving unit for receiving default destination information and the source information from the device, which default destination information defines a group of management servers including the management server; and
- a linking unit for linking the default destination information to the non-default destination information via the source information; for coupling the device via the network to the management server.

The invention also relates to a network-element processor program product to be run via a network-element for use in a method for coupling a device to a management server via a network comprising the network-element.

The network-element processor program product according to the invention is characterised in that the network-element processor program product comprises
- a first receiving function for receiving non-default destination information and the source information from the management server, which non-default destination information defines the management server and which source information defines the device and has been supplied to the management server;
- a second receiving function for receiving default destination information and the source information from the device, which default destination information defines a group of management servers including the management server; and
- a linking function for linking the default destination information to the non-default destination information via the source information;
for coupling the device via the network to the management server.

Embodiments of the management server according to the invention and of the server processor program product according to the invention and of the device according to the invention and of the device processor program product according to the invention and of the network according to the invention and of the network-element according to the invention and of the network-element processor program product according to the invention correspond with the embodiments of the method according to the invention.

The invention is based upon an insight, inter alia, that default destination information can be linked to non-default destination information, and is based upon a basic idea, inter alia, that source information can be used for this link.

The invention solves the problem, inter alia, to provide a method for coupling a device to a management server via a network, which method offers more options, and is advantageous, inter alia, in that the device can be coupled to the management server via the network, without being pre-configured, and without a user's choice being limited.

These and other aspects of the invention will be apparent from and elucidated with reference to the embodiments(s) described hereinafter.

Fig. 1 shows diagrammatically a device according to the invention coupled to a management server according to the invention via a network according to the invention; and

Fig. 2 shows an arrow chart of a method according to the invention for coupling a device according to the invention to a management server according to the invention via a network according to the invention.

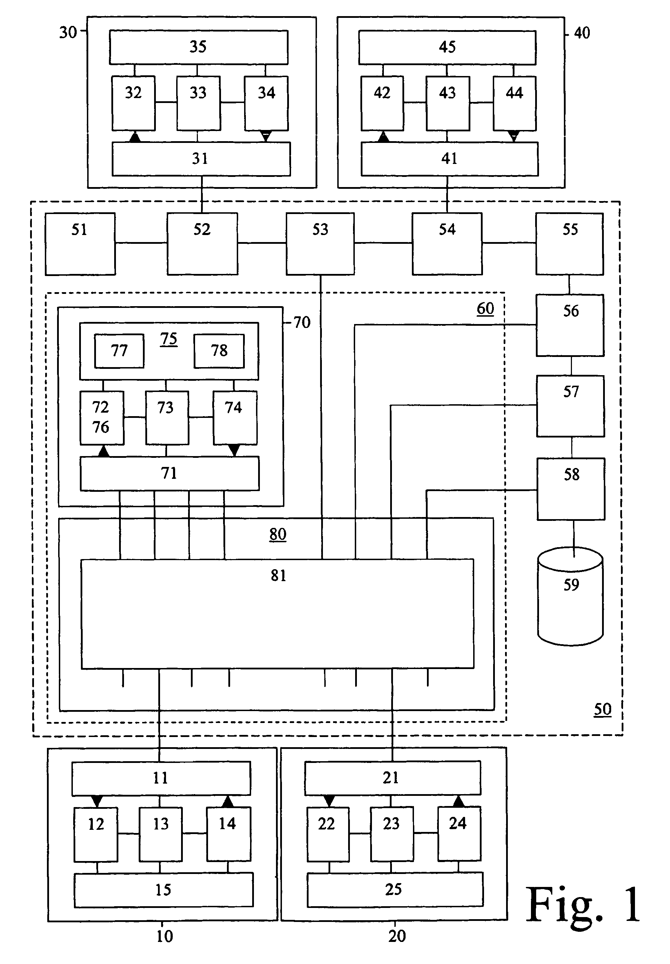

A device 10 according to the invention and a device 20 according to the invention coupled to a management server 30 according to the invention and to a management server 40 according to the invention via a network 50 according to the invention are shown in Fig. 1. The device 10,20 according to the invention comprises an interface 11,21 coupled to a coupling block 81 of an access multiplexer 70,80. The interface 11,21 is further coupled to a receiving unit 12,22, to a sending unit 14,24 and to a processor 13,23, which are all coupled to a further interface 15,25. The processor 13,23 is further coupled to the receiving unit 12,22 and to the sending unit 14,24.

The management server 30,40 according to the invention comprises an interface 31,41 coupled to a switch 52,54. The interface 31,41 is further coupled to a receiving unit 32,42, to a sending unit 34,44 and to a processor 33,43, which are all coupled to a further interface 35,45. The processor 33,43 is further coupled to the receiving unit 32,42 and to the sending unit 34,44.

The network 50 according to the invention comprises the coupling block 81 of an access multiplexer 70,80, which coupling block 81 is further coupled to a switch 53,56,57,58. The switch 53 is coupled to the switches 52,54, with the switch 52 further being coupled to a switch 51 and with the switch 54 further being coupled to a switch 55, which is further coupled to the switch 56. The switch 58 is coupled to a Domain Name Server 59. The access multiplexer 70,80 comprises a coupling part 80 comprising the coupling block 81 and a controlling part 70. This controlling part 70 comprises an interface 71 coupled to the coupling block 81. The interface 71 is further coupled to a receiving unit 72,76, to a sending unit 74 and to a processor 73, which are all coupled to a further interface 75. The processor 73 is further coupled to the receiving unit 72,76 and to the sending unit 74. The further interface 75 comprises a linking unit 77 and an IP address filter 78. The access multiplexer 70,80 is an example of a network-element 60 according to the invention.

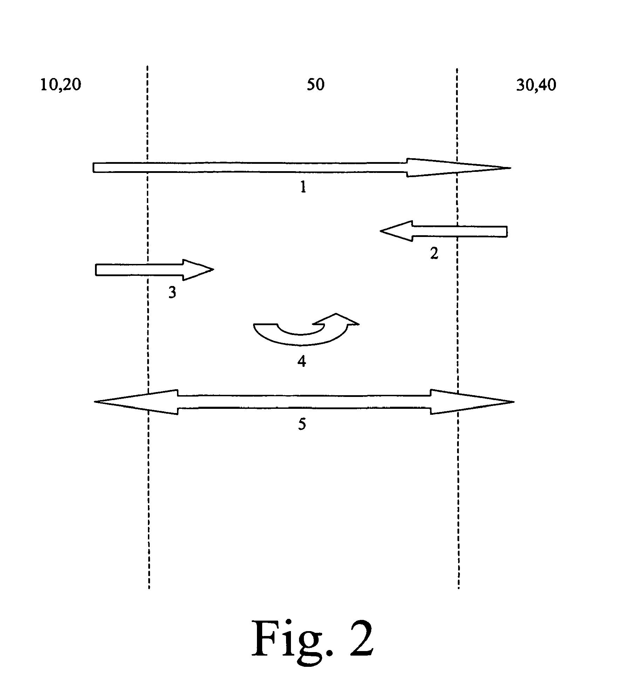

A method according to the invention is shown in Fig. 2. The device 10,20 according to the invention is located left of the left vertical line. The management server 30,40 according to the invention is located right of the right vertical line. In between, the network 50 according to the invention is located. The first horizontal arrow from the device 10,20 to the management server 30,40 indicates a reporting step 1 of supplying source information to the management server 30,40, which source information defines the device 10,20. The second horizontal arrow from the management server 30,40 to the network 50 indicates a configuring step 2 of supplying non-default destination information and the source information from the management server 30,40 to the network 50, which non-default destination information defines the management server 30,40. The third horizontal arrow from the device 10,20 to the network 50 indicates a requesting step 3 of supplying default destination information and the source information from the device 10,20 to the network 50, which default destination information defines a group of management servers 30,40 including the management server 30,40. The fourth semi-circular arrow inside the network 50 indicates a linking step 4 of linking the default destination information to the non-default destination information via the source information in the network 50. The fifth horizontal arrow from the device 10,20 via the network 50 to the management server 30,40 and vice versa indicates a coupling step 5 of coupling the device 10,20 via the network 50 to the management server 30,40.

The method according to the invention, the device 10,20 according to the invention, the management server 30,40 according to the invention and the network 50 according to the invention function as follows.

Firstly (reporting step 1) the source information defining the device 10 is supplied to the management server 30 for registering the device 10 at the management server 30. This source information for example comprises identification information for identifying the device 10 and is for example supplied by sending a fax to the content provider who owns the management server 30. Secondly (configuring step 2) the management server 30 configures (a part of) the network 50 for informing the network 50 of the non-default destination information defining the management server 30 and of the source information defining the device 10 and of their mutual relationship. The non-default or specific destination information for example comprises identification information defining the management server 30. So, in other words, after the device 10 has been registered at the management server 30, the management server 30 informs the network 50 of this new relationship between the device 10 and the management server 30.

Thirdly (requesting step 3) the default destination information defining a group of management servers 30,40 including the management server 30 and the source information are supplied from the device 10 to the network 50 for informing the network of the device 10 as defined by the source information wanting to contact the group of management servers 30,40 as defined by the default destination information and of their mutual relationship. The default or non-specific destination information for example comprises general purpose information defining a general purpose of the group of management servers 30,40. So, in other words, the device 10 requests the network 50 to be contacted to one of the management servers 30,40 of the group of management servers 30,40, but without the device being pre-configured and having any knowledge about this particular one management server 30.

Fourthly (linking step 4), because of the source information being linked to the non-default destination information as well as to the default destination information, the network 50 can now link the default destination information to the non-default destination information via the source information. Thereto, a linking unit in the network 50 such as for example the linking unit 77 comprises for example a memory with rows and columns, whereby for example the default destination information and the non-default destination information are stored in different columns of a same row, with this row being defined by the source information. Alternatively, a combination of the default destination information and the non-default destination information and the source information may be stored in a separate memory field, etc. Fifthly (coupling step 5), as a result, the device 10 can be coupled to the management server 30 via the network 50, without being pre-configured, and without a user's choice being limited (as further explained below).

According to a first embodiment, the source information comprises a source IP address, the non-default destination information comprises a non-default destination IP address, the default destination information comprises a default Uniform Resource Locator, the network 50 comprises a Domain Name Server 59 which is configured by the management server 30. In this case, the source information comprises a source IP address which is supplied to the device 30 at the start of an internet session in a way common in the art. By for example visiting a website of the content provider who owns the management server 30, this source IP address is supplied to the management server 30 automatically via the website. Further inputs from the device 10 into the management server 30 via this website are not to be excluded and further possible. The Domain Name Server 59 is configured by the management server 30 by supplying the non-default or specific destination address and the source IP address to this Domain Name Server 59. Thereto, for example a configuration instruction is generated by the processor 33 and supplied via the sending unit 34 and the interface 31 and the switch 52 to the Domain Name Server 59 via either the switches 53-58 or the access multiplexer 70,80 together with the switch 58. The Domain Name Server 59 can then link the default or non-specific Uniform Resource Locator (as supplied by the device 10) to the non-default or specific destination IP address (as supplied by the management server 30) etc. The way a Domain Name Server 59 converts a Uniform Resource Locator into an IP address is common in the art, only this time the default or non-specific Uniform Resource Locator is converted into a non-default or specific IP address which is not unique per Uniform Resource Locator but which varies per Uniform Resource Locator in dependence of the source IP address defining the device 10. Thereto, the Domain Name Server 59 may comprise units such as for example the units 72,74,76,77. Alternatively, (a part of) the network-element 60 may form part of this Domain Name Server 59, and/or the Domain Name Server 59 may be an example of a network-element according to the invention.

According to a second embodiment, the source information comprises a source IP address, the non-default destination information comprises a non-default destination IP address, the default destination information comprises a default destination IP address, the network 50 comprises an IP address filter 78 which is configured by the management server 30. In this case, the source information comprises a source IP address which is supplied to the device 10 at the start of an internet session in a way common in the art. By for example visiting a website of the content provider who owns the management server 30, this source IP address is supplied to the management server 30 automatically via the website. Further inputs from the device 10 into the management server 30 via this website are not to be excluded and further possible. The IP address filter 78 is configured by the management server 30 by supplying the non-default or specific destination IP address and the source IP address to this IP address filter 78. Thereto, for example a configuration instruction is generated by the processor 33 and supplied via the sending unit 34 and the interface 31 and the switches 52 and 53 to the access multiplexer 70,80. The IP address filter 78 can then link/replace the default or non-specific destination IP address (as supplied by the device 10) to/by the non-default or specific destination IP address (as supplied by the management server 30) etc. The way an IP address filter 78 links/replaces a first destination IP address to/by a second destination IP address is common in the art, only this time the first destination IP address is linked/replaced to/by a second destination IP address which is not unique per first destination IP address but which varies per first destination IP address in dependence of the source IP address defining the device 10.

Compared to a first prior art method whereby a device is pre-configured (the device then comprises one/more specific destination addresses defining one/more specific management servers, with a user's choice being limited to the management servers defined by the pre-stored specific destination addresses), the method according to the invention offers many more options.

Compared to a second prior art method whereby a device is not pre-configured (the device then comprises a non-specific destination identifier, with a local access provider being capable of converting the non-specific destination identifier into a specific destination identifier defining a local management server, which conversion is done relatively unflexibly - one non-specific destination identifier is always converted/translated into one and the same specific destination identifier - in which case a user's choice is limited to the local management server defined by the local access provider), the method according to the invention offers many more options.

Generally, a processor program product is stored on a medium and is run via a processor. The expression "for" in for example "for coupling" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities. The steps 1-5 do not exclude further steps as described for the Fig. 1 and 2. Further blocks and arrows may be present in these Fig. 1 and 2, without departing from the scope of this invention.

## Claims

1. Method for coupling a device (10,20) to a management server (30,40) via a network (50), **characterised in that** the method comprises
- a reporting step (1) of supplying source information to the management server (30,40), which source information defines the device (10,20);
- a configuring step (2) of supplying non-default destination information and the source information from the management server (30,40) to the network (50), which non-default destination information defines the management server (30,40);
- a requesting step (3) of supplying default destination information and the source information from the device (10,20) to the network (50), which default destination information defines a group of management servers (30,40) including the management server (30,40); and
- a linking step (4) of linking the default destination information to the non-default destination information via the source information in the network (50); and
- a coupling step (5) of coupling the device (10,20) via the network (50) to the management server (30,40).

2. Method as defined in claim 1, **characterised in that** the source information comprises a source IP address, the non-default destination information comprising a non-default destination IP address, the default destination information comprising a default Uniform Resource Locator, the network (50) comprising a Domain Name Server (59) which is configured by the management server (30,40).

3. Method as defined in claim 1, **characterised in that** the source information comprises a source IP address, the non-default destination information comprising a non-default destination IP address, the default destination information comprising a default destination IP address, the network (50) comprising an IP address filter (78) which is configured by the management server (30,40).

4. Management server (30,40) for use in a method for coupling a device (10,20) to the management server (30,40) via a network (50), **characterised in that** the management server (30,40) comprises
- a receiving unit (32,42) for receiving source information, which source information defines the device (10,20); and
- a sending unit (34,44) for sending non-default destination information and the source information to the network (50), which non-default destination information defines the management server (30,40);
whereby default destination information and the source information are supplied from the device (10,20) to the network (50), which default destination information defines a group of management servers (30,40) including the management server (30,40), the default destination information being linked to the non-default destination information via the source information in the network (50) for coupling the device (10,20) via the network (50) to the management server (30,40).

5. Server processor program product to be run via a management server (30,40) for use in a method for coupling a device (10,20) to the management server (30,40) via a network (50), **characterised in that** the server processor program product comprises
- a receiving function for receiving source information, which source information defines the device (10,20); and
- a sending function for sending non-default destination information and the source information to the network (50), which non-default destination information defines the management server (30,40);
whereby default destination information and the source information are supplied from the device (10,20) to the network (50), which default destination information defines a group of management server (30,40)s including the management server (30,40), the default destination information being linked to the non-default destination information via the source information in the network (50) for coupling the device (10,20) via the network (50) to the management server (30,40).

6. Device (10,20) for use in a method for coupling the device (10,20) to a management server (30,40) via a network (50), **characterised in that** the device (10,20) comprises
- a sending unit (14,24) for sending default destination information and source information to the network (50), which default destination information defines a group of management servers (30,40) including the management server (30,40) and which source information defines the device (10,20) and has been supplied to the management server (30,40);
whereby non-default destination information and the source information are supplied from the management server (30,40) to the network (50), which non-default destination information defines the management server (30,40), the default destination information being linked to the non-default destination information via the source information in the network (50) for coupling the device (10,20) via the network (50) to the management server (30,40).

7. Device (10,20) processor program product to be run via a device (10,20) for use in a method for coupling the device (10,20) to a management server (30,40) via a network (50), **characterised in that** the device (10,20) processor program product comprises
- a sending function for sending default destination information and source information to the network (50), which default destination information defines a group of management servers (30,40) including the management server (30,40) and which source information defines the device (10,20) and has been supplied to the management server (30,40);
whereby non-default destination information and the source information are supplied from the management server (30,40) to the network (50), which non-default destination information defines the management server (30,40), the default destination information being linked to the non-default destination information via the source information in the network (50) for coupling the device (10,20) via the network (50) to the management server (30,40).

8. Network (50) for use in a method for coupling a device (10,20) to a management server (30,40) via the network (50), **characterised in that** the network (50) comprises
- a first receiving unit (72) for receiving non-default destination information and source information from the management server (30,40), which non-default destination information defines the management server (30,40) and which source information defines the device (10,20) and has been supplied to the management server (30,40);
- a second receiving unit (76) for receiving default destination information and the source information from the device (10,20), which default destination information defines a group of management servers (30,40) including the management server (30,40); and
- a linking unit (77) for linking the default destination information to the non-default destination information via the source information;
for coupling the device (10,20) via the network (50) to the management server (30,40).

9. Network-element (60) for use in a method for coupling a device (10,20) to a management server (30,40) via a network (50) comprising the network-element (60), **characterised in that** the network-element (60) comprises
- a first receiving unit (72) for receiving non-default destination information and source information from the management server (30,40), which non-default destination information defines the management server (30,40) and which source information defines the device (10,20) and has been supplied to the management server (30,40);
- a second receiving unit (76) for receiving default destination information and the source information from the device (10,20), which default destination information defines a group of management servers (30,40) including the management server (30,40); and
- a linking unit (77) for linking the default destination information to the non-default destination information via the source information;
for coupling the device (10,20) via the network (50) to the management server (30,40).

10. Network-element processor program product to be run via a network-element (60) for use in a method for coupling a device (10,20) to a management server (30,40) via a network (50) comprising the network-element (60), **characterised in that** the network-element processor program product comprises
- a first receiving function for receiving non-default destination information and source information from the management server (30,40), which non-default destination information defines the management server (30,40) and which source information defines the device (10,20) and has been supplied to the management server (30,40);
- a second receiving function for receiving default destination information and the source information from the device (10,20), which default destination information defines a group of management servers (30,40) including the management server (30,40); and
- a linking function for linking the default destination information to the non-default destination information via the source information;
for coupling the device (10,20) via the network (50) to the management server (30,40).

## Patentansprüche

1. Verfahren zur Kopplung eines Gerätes (10,20) mit einem Verwaltungsserver (30,40) über ein Netzwerk (50), **dadurch gekennzeichnet, dass** das Verfahren folgendes umfasst:
- Einen Berichts-Schritt (1), der Quell-Information zum Verwaltungsserver (30,40) liefert, wobei die Quell-Information das Gerät (10,20) definiert;
- Einen Konfigurations-Schritt (2), der nicht voreingestellte Ziel-Information und die Quell-Information vom Verwaltungsserver (30,40) zum Netzwerk (50) liefert, wobei die nicht voreingestellte Ziel-Information den Verwaltungsserver (30,40) definiert;
- Einen Anforderungs-Schritt (3), der voreingestellte Ziel-Information und die Quell-Information vom Gerät (10,20) zum Netzwerk (50) liefert, wobei die voreingestellte Ziel-Information eine Gruppe von Verwaltungsservern (30,40) definiert, die den Verwaltungsserver (30,40) enthält; und
- Einen Verbindungs-Schritt (4), mit dem die voreingestellte Ziel-Information über die Quell-Information im Netzwerk (50) mit der nicht voreingestellten Ziel-Information verbunden wird; und
- Einen Kopplungs-Schritt (5), mit dem das Gerät (10,20) über das Netzwerk (50) mit dem Verwaltungsserver (30,40) gekoppelt wird.

2. Verfahren, wie in Anspruch 1 definiert, **dadurch gekennzeichnet, dass** die Quell-Information eine Quell-IP-Adresse enthält, die nicht voreingestellte Ziel-Information eine nicht voreingestellte Ziel-IP-Adresse enthält, die voreingestellte Ziel-Information einen voreingestellten Uniform Resource Locator enthält, das Netzwerk (50) einen Domain Name Server (59) enthält, der vom Verwaltungsserver (30,40) konfiguriert wird.

3. Verfahren, wie in Anspruch 1 definiert, **dadurch gekennzeichnet, dass** die Quell-Information eine Quell-IP-Adresse enthält, die nicht voreingestellte Ziel-Information eine nicht voreingestellte Ziel-IP-Adresse enthält, die voreingestellte Ziel-Information eine voreingestellte Ziel-IP-Adresse enthält, das Netzwerk (50) einen IP-Adress-Filter (78) enthält, der vom Verwaltungsserver (30,40) konfiguriert wird.

4. Verwaltungsserver (30,40) zur Verwendung in einem Verfahren zur Kopplung eines Gerätes (10,20) über ein Netzwerk (50) mit dem Verwaltungsserver (30,40), **dadurch gekennzeichnet, dass** der Verwaltungsserver (30,40) folgendes umfasst:
- Eine Empfangseinheit (32,42) zum Empfang von Quell-Information, wobei die Quell-Information das Gerät (10,20) definiert; und
- Eine Sendeeinheit (34,44) zum Senden von nicht voreingestellter Ziel-Information und der Quell-Information an das Netzwerk (50), wobei die nicht voreingestellte Ziel-Information den Verwaltungsserver (30,40) definiert;
wobei voreingestellte Ziel-Information und die Quell-Information vom Gerät (10,20) zum Netzwerk (50) geliefert werden, wobei die voreingestellte Ziel-Information eine Gruppe von Verwaltungsservern (30,40) definiert, die den Verwaltungsserver (30,40) enthält, und wobei die voreingestellte Ziel-Information mit der nicht voreingestellten Ziel-Information über die Quell-Information im Netzwerk (50) verbunden ist, um das Gerät (10,20) über das Netzwerk (50) mit dem Verwaltungsserver (30,40) zu koppeln.

5. Server-Prozessor-Programm-Produkt zur Ausführung auf einem Verwaltungsserver (30,40) zur Verwendung in einem Verfahren zur Kopplung eines Gerätes (10,20) über ein Netzwerk (50) mit dem Verwaltungsserver (30,40), **dadurch gekennzeichnet, dass** das Server-Prozessor-Programm-Produkt folgendes umfasst:
- Eine Empfangsfunktion zum Empfang von Quell-Information, wobei die Quell-Information das Gerät (10,20) definiert; und
- Eine Sendefunktion zum Senden von nicht voreingestellter Ziel-Information und der Quell-Information an das Netzwerk (50), wobei die nicht voreingestellte Ziel-Information den Verwaltungsserver (30,40) definiert;
wobei voreingestellte Ziel-Information und die Quell-Information vom Gerät (10,20) zum Netzwerk (50) geliefert werden, wobei die voreingestellte Ziel-Information eine Gruppe von Verwaltungsservern (30,40) definiert, die den Verwaltungsserver (30,40) enthält, und wobei die voreingestellte Ziel-Information mit der nicht voreingestellten Ziel-Information über die Quell-Information im Netzwerk (50) verbunden ist, um das Gerät (10,20) über das Netzwerk (50) mit dem Verwaltungsserver (30,40) zu koppeln.

6. Gerät(10,20) zur Verwendung in einem Verfahren zur Kopplung des Gerätes (10,20) über ein Netzwerk (50) mit dem Verwaltungsserver (30,40), **dadurch gekennzeichnet, dass** das Gerät (10,20) folgendes umfasst:
- Eine Sendeeinheit (14,24) zum Senden von voreingestellter Ziel-Information und Quell-Information an das Netzwerk (50), wobei die voreingestellte Ziel-Information eine Gruppe von Verwaltungsservern (30,40) definiert, die den Verwaltungsserver (30,40) enthält, und wobei die Quell-Information das Gerät (10,20) definiert und an den Verwaltungsserver (30,40) geliefert wurde;
wobei nicht voreingestellte Ziel-Information und die Quell-Information vom Verwaltungsserver (30,40) zum Netzwerk (50) geliefert werden, wobei die nicht voreingestellte Ziel-Information den Verwaltungsserver (30,40) definiert, wobei die voreingestellte Ziel-Information mit der nicht voreingestellten Ziel-Information über die Quell-Information im Netzwerk (50) verbunden ist, um das Gerät (10,20) über das Netzwerk (50) mit dem Verwaltungsserver (30,40) zu koppeln.

7. Geräte-(10,20)-Prozessor-Programm-Produkt, das auf einem Gerät (10,20) läuft, zur Verwendung in einem Verfahren zur Kopplung des Gerätes (10,20) mit einem Verwaltungsserver (30,40) über ein Netzwerk (50), **dadurch gekennzeichnet, dass** das Geräte-(10,20)-Prozessor-Programm-Produkt folgendes enthält:
- Eine Sendefunktion zum Senden von voreingestellter Ziel-Information und Quell-Information an das Netzwerk (50), wobei die voreingestellte Ziel-Information eine Gruppe von Verwaltungsservern (30,40) definiert, die den Verwaltungsserver (30,40) enthält, und wobei die Quell-Information das Gerät (10,20) definiert und an den Verwaltungsserver (30,40) geliefert wurde;
wobei nicht voreingestellte Ziel-Information und die Quell-Information vom Verwaltungsserver (30,40) zum Netzwerk (50) geliefert werden, wobei die nicht voreingestellte Ziel-Information den Verwaltungsserver (30,40) definiert, wobei die voreingestellte Ziel-Information mit der nicht voreingestellten Ziel-Information über die Quell-Information im Netzwerk (50) verbunden ist, um das Gerät (10,20) über das Netzwerk (50) mit dem Verwaltungsserver (30,40) zu koppeln.

8. Netzwerk (50) für die Verwendung in einem Verfahren zur Kopplung eines Gerätes (10,20) mit einem Verwaltungsserver (30,40) über das Netzwerk (50), **dadurch gekennzeichnet, dass** das Netzwerk (50) folgendes umfasst:
- Eine erste Empfangseinheit (72) zum Empfang von nicht voreingestellter Ziel-Information und Quell-Information vom Verwaltungsserver (30,40), wobei die nicht voreingestellte Ziel-Information den Verwaltungsserver (30,40) definiert und wobei die Quell-Information das Gerät (10,20) definiert und an den Verwaltungsserver (30,40) geliefert wurde;
- Eine zweite Empfangseinheit (76) zum Empfang von voreingestellter Ziel-Information und der Quell-Information vom Gerät (10,20), wobei die voreingestellte Ziel-Information eine Gruppe von Verwaltungsservern (30,40) definiert, die den Verwaltungsserver (30,40) enthält; und
- Eine Verbindungseinheit (77) zum Verbinden der voreingestellten Ziel-Information mit der nicht voreingestellten Ziel-Information über die Quell-Information;
um das Gerät (10,20) über das Netzwerk (50) mit dem Verwaltungsserver (30,40) zu koppeln.

9. Netzwerkelement (60) für die Verwendung in einem Verfahren zur Kopplung eines Gerätes (10,20) mit einem Verwaltungsserver (30,40) über ein Netzwerk (50), welches das Netzwerkelement (60) enthält, **dadurch gekennzeichnet, dass** das Netzwerkelement (60) folgendes umfasst:
- Eine erste Empfangseinheit (72) zum Empfang von nicht voreingestellter Ziel-Information und Quell-Information vom Verwaltungsserver (30,40), wobei die nicht voreingestellte Ziel-Information den Verwaltungsserver (30,40) definiert und wobei die Quell-Information das Gerät (10,20) definiert und an den Verwaltungsserver (30,40) geliefert wurde;
- Eine zweite Empfangseinheit (76) zum Empfang von voreingestellter Ziel-Information und der Quell-Information vom Gerät (10,20), wobei die voreingestellte Ziel-Information eine Gruppe von Verwaltungsservern (30,40) definiert, die den Verwaltungsserver (30,40) enthält; und
- Eine Verbindungseinheit (77) zum Verbinden der voreingestellten Ziel-Information mit der nicht voreingestellten Ziel-Information über die Quell-Information;
um das Gerät (10,20) über das Netzwerk (50) mit dem Verwaltungsserver (30,40) zu koppeln.

10. Netzwerkelement-Prozessor-Programm-Produkt zur Ausführung in einem Netzwerkelement (60) zur Verwendung in einem Verfahren zur Kopplung eines Gerätes (10,20) mit einem Verwaltungsserver (30,40) über ein Netzwerk (50), welches das Netzwerkelement (60) enthält, **dadurch gekennzeichnet, dass** das Netzwerkelement-Prozessor-Programm-Produkt folgendes umfasst:
- Eine erste Empfangsfunktion zum Empfang von nicht voreingestellter Ziel-Information und Quell-Information vom Verwaltungsserver (30,40), wobei die nicht voreingestellte Ziel-Information den Verwaltungsserver (30,40) definiert und wobei die Quell-Information das Gerät (10,20) definiert und an den Verwaltungsserver (30,40) geliefert wurde;
- Eine zweite Empfangsfunktion zum Empfang von voreingestellter Ziel-Information und der Quell-Information vom Gerät (10,20), wobei die voreingestellte Ziel-Information eine Gruppe von Verwaltungsservern (30,40) definiert, die den Verwaltungsserver (30,40) enthält; und
- Eine Verbindungsfunktion zum Verbinden der voreingestellten Ziel-Information mit der nicht voreingestellten Ziel-Information über die Quell-Information;
um das Gerät (10,20) über das Netzwerk (50) mit dem Verwaltungsserver (30,40) zu koppeln.

## Revendications

1. Procédé de raccordement d'un dispositif (10, 20) à un serveur de gestion (30, 40) par le biais d'un réseau (50), **caractérisé en ce que** le procédé comprend :
- une étape de compte-rendu (1) consistant à fournir des données source au serveur de gestion (30, 40), ces données source définissant le dispositif (10, 20);
- une étape de configuration (2) consistant à fournir des données de destination autres que par défaut, et les données source depuis le serveur de gestion (30, 40) vers le réseau (50), ces données de destination autres que par défaut définissant le serveur de gestion (30, 40);
- une étape de requête (3) consistant à fournir des données de destination par défaut et les données source depuis le dispositif (10, 20) vers le réseau (50), ces données de destination par défaut définissant un groupe de serveurs de gestion (30, 40) comprenant le serveur de gestion (30, 40); et
- une étape de liaison (4) consistant à lier les données de destination par défaut aux données de destination autres que par défaut par le biais des données source dans le réseau (50) ; et
- une étape de raccordement (5) consistant à raccorder le dispositif (10, 20) par le biais du réseau (50) au serveur de gestion (30, 40).

2. Procédé selon la revendication 1, **caractérisé en ce que** les données source comprennent une adresse IP source, les données de destination autres que par défaut comprenant une adresse IP de destination autre que par défaut, les données de destination par défaut comprenant une adresse URL (Uniform Resource Locator), le réseau (50) comprenant un serveur de nom de domaine (59) qui est configuré par le serveur de gestion (30, 40).

3. Procédé selon la revendication 1, **caractérisé en ce que** les données source comprennent une adresse IP source, les données de destination autres que par défaut comprenant une adresse IP de destination autre que par défaut, les données de destination par défaut comprenant une adresse IP de destination par défaut, le réseau (50) comprenant un filtre d'adresse IP (78) qui est configuré par le serveur de gestion (30, 40).

4. Serveur de gestion (30, 40) adapté pour être utilisé dans un procédé de raccordement d'un dispositif (10, 20) au serveur de gestion (30, 40) par le biais d'un réseau (50), **caractérisé en ce que** le serveur de gestion (30, 40) comprend :
- une unité de réception (32, 42) pour recevoir des données source, ces données source définissant le dispositif (10, 20) ; et
- une unité de transmission (34, 44) pour envoyer des données de destination autres que par défaut et les données source vers le réseau (50), ces données de destination autres que par défaut définissant le serveur de gestion (30, 40) ;
moyennant quoi des données de destination par défaut et les données source sont envoyées depuis le dispositif (10, 20) vers le réseau (50), ces données de destination par défaut définissant un groupe de serveurs de gestion (30, 40) comprenant le serveur de gestion (30, 40), les données de destination par défaut étant liées aux données de destination autres que par défaut par le biais des données source dans le réseau (50) de façon à raccorder le dispositif (10, 20) par le biais du réseau (50) au serveur de gestion (30, 40).

5. Produit programme de processeur de serveur destiné à être exécuté par le biais d'un serveur de gestion (30, 40) adapté pour être utilisé dans un procédé de raccordement d'un dispositif (10, 20) au serveur de gestion (30, 40) par le biais d'un réseau (50), **caractérisé en ce que** le produit programme de processeur de serveur comprend :
- une fonction de réception pour recevoir des données source, ces données source définissant le dispositif (10, 20) ; et
- une fonction de transmission pour envoyer des données de destination autres que par défaut et les données source vers le réseau (50), ces données de destination autres que par défaut définissant le serveur de gestion (30, 40) ;
moyennant quoi des données de destination par défaut et les données source sont envoyées depuis le dispositif (10, 20) vers le réseau (50), ces données de destination par défaut définissant un groupe de serveurs de gestion (30, 40) comprenant le serveur de gestion (30, 40), les données de destination par défaut étant liées aux données de destination autres que par défaut par le biais des données source dans le réseau (50) de façon à raccorder le dispositif (10, 20) par le biais du réseau (50) au serveur de gestion (30, 40).

6. Dispositif (10, 20) adapté pour être utilisé dans un procédé de raccordement du dispositif (10, 20) à un serveur de gestion (30, 40) par le biais d'un réseau (50), **caractérisé en ce que** le dispositif (10, 20) comprend :
- une unité de transmission (14, 24) pour envoyer des données de destination par défaut et des données source vers le réseau (50), ces données de destination par défaut définissant un groupe de serveurs de gestion (30, 40) comprenant le serveur de gestion (30, 40) et ces données source définissant le dispositif (10, 20) et ayant été envoyées vers le serveur de gestion (30, 40) ;
moyennant quoi des données de destination autres que par défaut et les données source sont envoyées depuis le serveur de gestion (30, 40) vers le réseau (50), ces données de destination autres que par défaut définissant le serveur de gestion (30, 40), les données de destination par défaut étant liées aux données de destination autres que par défaut par le biais des données source dans le réseau (20) de façon à raccorder le dispositif (10, 20) par le biais du réseau (50) au serveur de gestion (30, 40).

7. Produit programme de processeur de dispositif (10, 20) destiné à être exécuté par le biais d'un dispositif (10, 20) adapté pour être utilisé dans un procédé de raccordement du dispositif (10, 20) à un serveur de gestion (30, 40) par le biais d'un réseau (50), **caractérisé en ce que** le produit programme de processeur de dispositif (10, 20) comprend :
- une fonction de transmission pour envoyer des données de destination par défaut et des données source vers le réseau (50), ces données de destination par défaut définissant un groupe de serveurs de gestion (30, 40) comprenant le serveur de gestion (30, 40) et ces données source définissant le dispositif (10, 20) et ayant été envoyées vers le serveur de gestion (30, 40) ;
moyennant quoi des données de destination autres que par défaut et les données source sont envoyées depuis le serveur de gestion (30, 40) vers le réseau (50), ces données de destination autres que par défaut définissant le serveur de gestion (30, 40), les données de destination par défaut étant liées aux données de destination autres que par défaut par le biais des données source dans le réseau (50) de façon à raccorder le dispositif (10, 20) par le biais du réseau (50) au serveur de gestion (30, 40).

8. Réseau (50) adapté pour être utilisé dans un procédé de raccordement d'un dispositif (10, 20) à un serveur de gestion (30, 40) par le biais du réseau (50), **caractérisé en ce que** le réseau (50) comprend :
- une première unité de réception (72) pour recevoir des données de destination autres que par défaut et des données source en provenance du serveur de gestion (30, 40), ces données de destination autres que par défaut définissant le serveur de gestion (30, 40) et ces données source définissant le dispositif (10, 20) et ayant été envoyées vers le serveur de gestion (30, 40) ;
- une deuxième unité de réception (76) pour recevoir des données de destination par défaut et les données source en provenance du dispositif (10, 20), ces données de destination par défaut définissant un groupe de serveurs de gestion (40, 30) comprenant le serveur de gestion (30, 40) ; et
- une unité de liaison (77) pour lier les données de destination par défaut aux données de destination autres que par défaut par le biais des données source ;
pour raccorder le dispositif (10, 20) par le biais du réseau (50) au serveur de gestion (30, 40).

9. Élément de réseau (60) adapté pour être utilisé dans un procédé de raccordement d'un dispositif (10, 20) à un serveur de gestion (30, 40) par le biais d'un réseau (50) comprenant l'élément de réseau (60), **caractérisé en ce que** l'élément de réseau (60) comprend :
- une première unité de réception (72) pour recevoir des données de destination autres que par défaut et des données source en provenance du serveur de gestion (30, 40), ces données de destination autres que par défaut définissant le serveur de gestion (30, 40) et ces données source définissant le dispositif (10, 20) et ayant été envoyées vers le serveur de gestion (30, 40) ;
- une deuxième unité de réception (76) pour recevoir des données de destination par défaut et les données source en provenance du dispositif (10, 20), ces données de destination par défaut définissant un groupe de serveurs de gestion (30, 40) comprenant le serveur de gestion (30, 40) ; et
- une unité de liaison (77) pour lier les données de destination par défaut aux données de destination autres que par défaut par le biais des données source ;
pour raccorder le dispositif (10, 20) par le biais du réseau (50) au serveur de gestion (30, 40).

10. Produit programme de processeur d'élément de réseau destiné à être exécuté par le biais d'un élément de réseau (60) adapté pour être utilisé dans un procédé de raccordement d'un dispositif (10, 20) à un serveur de gestion (30, 40) par le biais d'un réseau (50) comprenant l'élément de réseau (60), **caractérisé en ce que** le produit programme de processeur d'élément de réseau comprend :
- une première fonction de réception pour recevoir des données de destination autres que par défaut et des données source en provenance du serveur de gestion (30, 40), ces données de destination autres que par défaut définissant le serveur de gestion (30, 40) et ces données source définissant le dispositif (10, 20) et ayant été envoyées vers le serveur de gestion (30, 40) ;
- une deuxième fonction de réception pour recevoir des données de destination par défaut et les données source en provenance du dispositif (10, 20), ces données de destination par défaut définissant un groupe de serveurs de gestion (30, 40) comprenant le serveur de gestion (30, 40) ; et
- une fonction de liaison pour lier les données de destination par défaut aux données de destination autres que par défaut par le biais des données source ;
pour raccorder le dispositif (10, 20) par le biais du réseau (50) au serveur de gestion (30, 40).
